(19)

**Europäisches Patentamt**
**European Patent Office**
**Office européen des brevets**

(11) **EP 2 569 949 B1**

(12) **EUROPEAN PATENT SPECIFICATION**

(45) Date of publication and mention
of the grant of the patent:
**21.02.2018 Bulletin 2018/08**

(51) Int Cl.:
***H04N 9/64*** *(2006.01)*     ***H04N 1/46*** *(2006.01)*
***H04N 1/60*** *(2006.01)*

(21) Application number: **11781082.0**

(22) Date of filing: **09.05.2011**

(86) International application number:
**PCT/US2011/035766**

(87) International publication number:
**WO 2011/143117 (17.11.2011 Gazette 2011/46)**

(54) **GAMUT COMPRESSION FOR VIDEO DISPLAY DEVICES**

FARBSKALENKOMPRIMIERUNG FÜR VIDEOANZEIGEVORRICHTUNGEN

COMPRESSION D'UNE GAMME DE COULEURS POUR DISPOSITIFS D'AFFICHAGE VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2010 US 334249 P**

(43) Date of publication of application:
**20.03.2013 Bulletin 2013/12**

(73) Proprietor: **Dolby Laboratories Licensing
Corporation
San Francisco, CA 94103 (US)**

(72) Inventors:
• **LONGHURST, Peter, W.
Vancouver, British Columbia V5L 2T6 (CA)**
• **O'DWYER, Robert
Vancouver
British Columbia V6T 0A5 (CA)**

• **WARD, Gregory, J.
San Francisco
CA 94103-4813 (US)**
• **JOHNSON, Lewis
Delta, British Columbia V4C 0A9 (CA)**

(74) Representative: **Dolby International AB
Patent Group Europe
Apollo Building, 3E
Herikerbergweg 1-35
1101 CN Amsterdam Zuidoost (NL)**

(56) References cited:
**EP-A- 2 120 448         JP-A- 2004 153 554
KR-A- 20040 011 760    US-A1- 2007 052 719
US-A1- 2007 211 272    US-A1- 2007 236 761
US-A1- 2009 285 478    US-B1- 6 618 499**

**Description**

Cross Reference to Related Applications

This application claims priority to United States Provisional Patent Application No. 61/334,249 filed 13 May 2010.

Technical Field

The invention relates to the processing and display of images. The invention has specific application to color images. Aspects of the invention provide apparatus and methods for adjusting image data for display on displays of specific types.

Background

Displays include televisions, computer monitors, home cinema displays, digital cinema displays, dedicated displays on devices such as tablet computers, cellular telephones, digital cameras, copiers, industrial controls, specialized displays such as displays for medical imaging, virtual reality, vehicle simulation and the like. Color displays may be used to display color images specified by image data.

Displays may incorporate any of a wide variety of underlying display technologies. For example, displays may comprise: cathode ray tube (CRT) displays; backlit liquid crystal displays (LCDs); plasma displays; organic LED displays (OLED displays); laser projectors; digital mirror device (DMD) displays; and electroluminescent displays. Within any of these general technologies a wide variety of different constructions and compositions for light-emitting and/or filtering elements are possible. As a result, different displays may have capabilities that differ significantly in areas such as: the range of different colors (gamut) that can be displayed; the available dynamic range; the white point and the like.

Image data (including video data and still image data) can have any of a wide variety of different formats. Some example image formats are: RGB, YUV, GIF, TIFF, JPEG/JIF, PNG, BMP, PDF, RAW, FITS, MPEG, MP4, high dynamic range (HDR) formats such as BEF, HDRi, JPEG XR, JPEG HDR, RGBE, ScRGB and many others. Image formats can have capabilities that differ significantly in areas such as: the gamut (range of colors) that can be specified, the range of luminance that can be specified, the number of discrete colors within the gamut that can be specified, the number of discrete luminance levels that can be specified and the like. Some image formats have multiple versions having different capabilities.

Images may be displayed on media other than displays. For example, images may be printed. Such other media may also differ from image data and from one another in achievable imaging characteristics.

Colors may be specified in many different color spaces. Some examples include RGB, HSV, LUV, YCbCr, YIQ, YCbCr, xvYCC, HSL, XYZ, CMYK, CIE LAB, IPT, and others. Different image data formats may specify colors in different color spaces.

It may be desirable to display image data on a display that has a gamut that is too limited to display the full range of colors and/or luminance specified in the image data. There is a need for apparatus and methods capable of adjusting image data to provide a good viewing experience even in cases where there is a mismatch between the image specification characteristics of image data and image reproduction characteristics of a display or other medium on which the image will be reproduced.

US 6,618,499 B1 discloses a system for mapping out-of-gamut points to a gamut surface for the purpose of printing images in a printer color space, wherein the image is defined in a display color space which is wider than the printer color space. The printer gamut is divided into two-dimensional slices of approximately constant hue. For each hue slice, out-of-gamut points are projected onto the printer gamut surface towards a projection point.

Summary of the Invention

The invention is defined by the independent claims. The dependent claims concern optional features of some embodiments of the invention.

The invention has a number of different aspects. These include, without limitation: color displays; apparatus for transmitting and/or processing image data; methods for altering image data to take into account capabilities of displays on which the image data will be displayed; methods for driving displays to reproduce image data which includes specification of out-of-gamut colors; methods for converting video data between formats and the like.

Further aspects of the invention and features of specific embodiments of the invention are described below.

Brief Description of the Drawings

The accompanying drawings illustrate non-limiting embodiments of the invention.

Figure 1 is a schematic representation of a color space with longitudinal and latitudinal lines demarcating the boundaries of a gamut.

Figure 2 is a flow chart which illustrates a method that may be applied to adjust image data that includes out-of-gamut pixels.

Figures 2A and 2B are slices through an out-of-gamut pixel (color point) and color gamut respectively in the plane of a longitudinal line passing through the pixel and the plane of a latitudinal line passing through the pixel.

Figures 3A, 3B, 3C and 3D illustrate example ways in which areas of a half-plane (segment) in which out-of-gamut points may be located may be sectioned.

Figure 4 illustrates compression as it may be applied in an example embodiment.

Figure 4A illustrates some possibilities for the types of compression that may be applied.

Figure 4B is a section through a color gamut showing a region into which out-of-gamut points may be compressed that is of non-uniform thickness.

Figures 5, 5A and 5B show example ways that a segment may be subdivided into sections.

Figure 6A through 6B are schematic illustrations showing intermediate steps in the subdivision of a segment into sections in an example embodiment.

Figure 7 is a schematic illustration of a data structure representing a gamut boundary.

Figure 8 is a flow chart illustrating an example mapping method for mapping out-of-gamut points to in-gamut points.

Figure 9 illustrates one approach that may be applied to determining an in-gamut location to which to transform an out-of-gamut point.

Figure 10 shows a latitudinal plane through an example gamut and illustrates a variation in the gamut boundary between segments.

Figure 10A is a flow chart illustrating a method which applies interpolation between distances determined for two adjacent segments to establish a mapping for a point.

Figure 11 is a block diagram of an example gamut compression apparatus

Figure 12 illustrates a possible set of configuration information for use in gamut mapping according to some example embodiments.

Figure 13 is a flow chart illustrating a method that may be applied to real-time gamut mapping of image data.

Figure 14 shows a cross section in color space of a gamut in which a grey line is both curved and translated relative to an axis of the color space; and Figure 14A shows a transformed version of the gamut of Figure 14.

Figure 14B illustrates the data flow in a gamut translation method wherein additional transformations are performed to accommodate an irregular gamut.

Figure 15 is a flow chart illustrating an example mapping method for mapping out-of-gamut points to in-gamut points.

Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

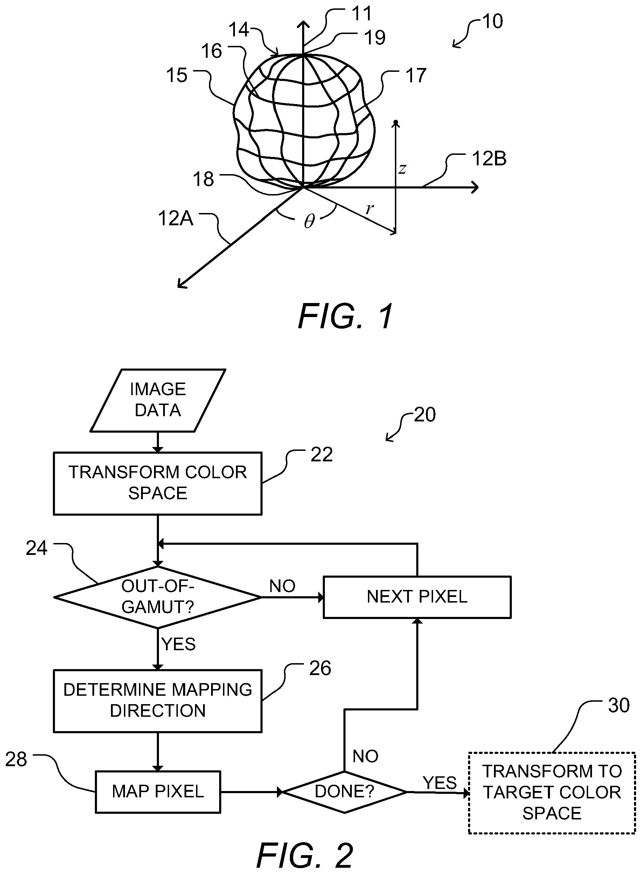

Figure 1 shows an example color space **10** defined by a lightness axis **11** and two color-specifying axes **12A** and **12B.** Axes **12A** and **12B** define a plane perpendicular to lightness axis **11**. A color gamut **14** has the form of a three-dimensional area in color space **10**. A boundary **15** of gamut **14** is shown as being demarcated by longitudinal lines **17** and latitudinal lines **16**. Gamut **14** has a black point **18** and a white point **19**. In this embodiment, black point **18** and white point **19** are both on lightness axis **11**. Gamut **14** may, for example, comprise a gamut of a particular display or another particular image reproduction process.

Advantageously, points in color space **10** may be defined by cylindrical coordinates. One coordinate $z$ indicates a height of a point above the plane defined by axes **12A** and **12B,** a second coordinate $r$ indicates a radial distance of the point from axis **11** and a third coordinate $è$ indicates the angle around axis **11** at which the point is located. Any point in color space **10** may be identified by the triplet $(r, è, z)$. In some color spaces such as color-opponent color spaces, $r$ is a chroma coordinate which indicates how colorful the point is (saturation or intensity of color), $z$ is a lightness coordinate indicating, for example, the perceived brightness of the point relative to a reference white, a luminance or the like, and $è$ is a hue coordinate which identifies the color of the point (e.g. a specific red, blue, pink, orange, green, etc.).

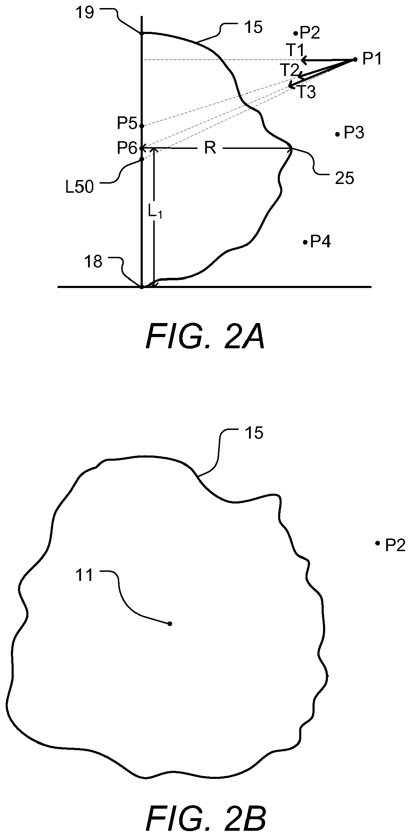

Figure 2 illustrates a method **20** that may be applied to adjust image data that includes out-of-gamut pixels to provide adjusted image data in which colors for all pixels are in gamut **14** (points on boundary **15** may be considered to be in gamut **14**). Each pixel can be represented by a point in color space **10**. The same point in color space **10** may be associated with any number of pixels.

Method **20** optionally transforms image data from another color space to color space **10** in block **22**. Image data may already be represented in color space **10** in which case block **22** is not required. In some embodiments, image data is initially represented in a first color space that is not a color-opponent color space and block **22** comprises transformation into a color-opponent color space.

The transformation applied to transform image data into color space **10** may involve a white point. For example, transformations into the CIELAB or IPT color spaces require that a white point be specified. In some cases, the white point for the image data may differ from that of an output device or medium. In such cases it is desirable that the white point of the device or medium is used as a white point for the transformation into color space **10.**

In some cases it may be desirable that an image specified by the image data be displayed while preserving a white point associated with the image data. One option for handling such cases is to transform the gamut boundary for the target device or medium into color space **10** using the white point of the target device or medium, and transform the image data into color space **10** via an intermediate color space transformation. The intermediate color space may, for example, be an XYZ color space. The image data is transformed into the intermediate color space using the white point associated with the image data. The image data in the intermediate color space is then transformed into color space **10** using the white point of the destination device or medium. This procedure may be used, for example to transform RGB image data into an IPT or CIELAB color space.

Another option is to transform the gamut boundary for the target device or medium into color space **10** using the white point of the target device or medium and transform the image data into color space **10** via an intermediate color space. The image data is transformed into the intermediate color space using the white point associated with the image data. The intermediate color space may, for example, be an XYZ color space. A chromatic adaptation is performed on the image data in the intermediate color space and then such image data is transformed from the intermediate color space into color space **10** using the white point of the destination device or medium.

A Chromatic Adaptation Transform or CAT is a transform that translates the whitepoint of a signal. A CAT is commonly used to adjust colour balance. A CAT may be applied to remove / account for color cast introduced by a display. Applying a CAT may be useful to map colors intended for the source image data to a target device. CAT are described, for example, in: G.D. Finlayson and S. Süsstrunk, Spectral Sharpening and the Bradford Transform, Proc. Color Imaging Symposium (CIS 2000), pp. 236-243, 2000; G.D. Finlayson and S. Süsstrunk, Performance of a Chromatic Adaptation Transform Based on Spectral Sharpening, Proc. IS&T/SID 8th Color Imaging Conference, Vol. 8, pp. 49-55, 2000; S. Süsstrunk, J. Holm and G.D. Finlayson, Chromatic adaptation performance of different RGB sensors, Proc. IS&T/SPIE Electronic Imaging 2001: Color Imaging, Vol. 4300, pp. 172-183, 2001; G. Sharma (Ed.) Digital Color Imaging Handbook, CRC Press 2003 ISBN 0-8493-0900-X. The CAT may comprise a Bradford CAT or linearized Bradford CAT or spectral sharpening transform or von Kries adaptation transform, for example.

Another option is to transform both the image data and the gamut boundary of the target device or medium into color space **10** using a predetermined white point, for example a D65 white point. Once in color space **10,** a translation/rotation may be performed on both the transformed image data and the gamut boundary. The transformation/rotation is selected to shift a greyscale line of the gamut to coincide with axis **11** of color space **10**. After gamut compression as described herein an inverse of the translation/rotation may be performed before transforming the resulting gamut-compressed data into a color space suitable for application to display an image on a target display or present the image on a target medium.

Blocks **24** through **28** of method **20** are performed for each pixel. Pixels may be processed in parallel or sequentially, in any order, or in some combination thereof. Block **24** determines whether a pixel is in-gamut or out-of-gamut. Block **24** may, for example, comprise comparing color coordinates for the pixel (e.g. coordinates referenced to axes **11, 12A** and **12B** of Figure 1) to boundary data for gamut **14** of the target display or medium. If the pixel is in gamut **14** then no action is required in this embodiment. If the pixel is out-of-gamut, then in block **26** a mapping direction is determined for the pixel. A mapping direction may comprise a vector pointing toward a point on gamut boundary **15** to which the pixel will be mapped. The mapping direction may be a function of the luminance for the pixel. In block **28** the color coordinates for the pixel are projected in the mapping direction onto gamut boundary **15** (so that the color coordinates are adjusted to the point of intersection of the gamut boundary with a line in the mapping direction). The result of block **28** is gamut-compressed image data.

The mapping direction may be selected to preserve the hue of the pixel (i.e. such that a hue value before the block **28** adjustment is the same, at least to within some tolerance, as the hue value after the block **28** adjustment). In some embodiments, where color space **10** is a color-opponent color space, hue is preserved within the half-planes defined by axis **11** and a longitudinal line **17,** and bounded along one edge by axis **11.** In such embodiments, as long as the mapping direction lies in such a half plane, hue will be preserved. Achievable color spaces are not perfectly hue-preserving in longitudinal half-planes but can be acceptably close for many applications. The IPT and CIE LAB color spaces are examples of suitable color-opponent color spaces in which the methods described herein may be applied.

In optional block **30,** gamut-compressed image data is transformed into a color space suitable for application in displaying an image on a target display or presenting an image on a target medium. Advantageously, points on axis **11** correspond to greyscale values for the target device or medium. In some embodiments, block **30** comprises two stages (which may optionally be executed using a combined mathematical operation). For example, the transformation of block **30** may be executed by performing a first transformation into an intermediate color space and a second transformation from the intermediate color space to a color space convenient for use in driving a target display and/or applying the gamut-compressed image to a target medium.

In some embodiments, an algorithm for choosing the mapping direction for a point is selected based at least in part on a luminance value for the point. For example, in some embodiments, the mapping direction is selected differently depending upon whether or not the pixel's z-coordinate (the position of the pixel along axis **11**) is above or below a threshold value. The threshold value may itself be a function of one or both of the position of the pixel along color coordinates **12A** and **12B.** In some embodiments, the threshold value corresponds to or is a function of a location of a cusp in boundary **15** as described in more detail below.

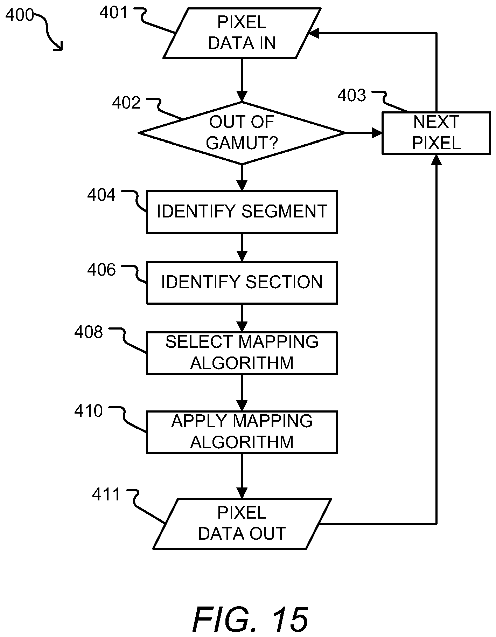

Figure 15 illustrates a method **400** for mapping out-of-gamut points to in-gamut points. Method **400** receives incoming pixel data **401** for a point. If the point is determined to be out-of-gamut at block **402,** method **400** identifies at block **404** the segment (e.g. a surface having constant hue in the color space) on which the point is located. The segment may be divided into sections such as wedge-shaped sections. At block **406,** method **400** identifies the section of the segment at which the point is located. At block **408,** a mapping algorithm is selected for mapping the out-of-gamut point to a location in the color space which is in-gamut. The mapping algorithm may be selected based at least in part on the section in which the point is located, or some other factor(s). For example, a particular mapping algorithm may be associated with each section of the segment. At block **410,** the mapping algorithm selected at block **408** is applied to map the out-of-gamut point to a corresponding in-gamut point, resulting in gamut-compressed pixel data **411.** Method **400** repeats after retrieving pixel data for the next pixel at block **403.**

Figures 2A and 2B, respectively, are slices through an out-of-gamut pixel and color gamut **14** in the plane of a longitudinal line passing through the pixel (Figure 2A) and the plane of a latitudinal line passing through the pixel (Figure 2B). The plane shown in Figure 2A may be called a longitudinal plane. The plane shown in Figure 2B may be called a transverse plane. Axis **11** and a portion of boundary **15** can be seen in each of Figures 2A and 2B. Where color space **10** is a color-opponent color space, hue is preserved by transformations which take a point in the plane of Figure 2A to another point in the plane of Figure 2A or, more generally, transformations which take a point in a longitudinal half-plane to another point in the same longitudinal half-plane or transformations which preserve the value of the *è* coordinate. Such transformations involve mapping directions that are directed toward (e.g. intersect with) axis **11.**

Figure 2A illustrates a case wherein boundary **15** exhibits a cusp **25** between white point **19** and black point **18.** The presence of cusps **25** is typical of the gamuts of most displays and other media. Cusp **25** is a point on boundary **15** in a longitudinal half-plane that is farthest from axis **11.** The location of cusp **25** along axis **11** (indicated as **L1** in Figure 2A) and the distance of cusp **25** from axis **11** (indicated as **R** in Figure 2A) may differ for different longitudinal half-planes.

Figure 2A shows a number of out-of-gamut points **P1, P2, P3** and **P4.** Point **P2** is also shown in Figure 2B. Some example hue-preserving mapping directions **T1, T2, T3** are shown for **P1. T1** takes **P1** toward a point on boundary **15** having the same value along axis **11** as does **P1. T1** may be called a constant luminance transformation. **T2** takes **P1** toward a specific point **P5** on axis **11.** Point **P5** may comprise, for example a global center point. **T3** takes **P1** toward a different specific point **P6** on axis **11.** In the illustrated embodiment, point **P6** has the same luminance as cusp **25.** Cusp **25** may be identified as the point in a segment on boundary **15** that is farthest from axis **11.** Where a device gamut has a boundary section in a segment in which points in the section are of equal maximum chroma then a midpoint of the section may be identified as the cusp.

In some embodiments, a mapping direction for at least some points may be in a direction toward a point that is not on axis **11.** In some embodiments, the mapping direction for at least some points is toward a focus point that is on a far side of axis **11** from the point being mapped.

Some embodiments apply different algorithms for determining mapping directions depending at least in part upon the distance of an out-of-gamut point along axis **11** (the "lightness" of the point in some embodiments). For example, the mapping direction may be determined according to a first algorithm for points below cusp **25** (e.g. points having values of lightness less than **L1**) and a second algorithm for points above cusp **25** (e.g. points having values of lightness greater than **L1**). In some embodiments, mapping directions are selected in one way for points above cusp **25** and in another way for points below cusp **25.** In some embodiments points above a line are mapped according to a first algorithm while points below the line are mapped according to a second algorithm different from the first algorithm.

For example, where an out-of-gamut point is lower than the corresponding cusp **25,** the mapping direction may be chosen to lie in the same transverse plane as the point being mapped (e.g. keeping lightness constant). In the same example, where the out-of-gamut point is higher than the corresponding cusp **25** the mapping direction may be chosen differently, for example mapping toward a fixed point on axis **11.** The fixed point may be chosen in various ways, such as, for example: a mapping direction toward a point that is half-way between white point **19** and black point **18** (indicated as having the value **L50** in Figure 2A); a mapping direction toward the location of cusp **25** along axis **11** (e.g. the point on axis **11** having the value **P6** in Figure 2A); etc.

Other algorithms may be applied for determining a mapping direction. Some examples are: algorithms that choose a direction toward the closest point on boundary **15** having the same hue as the point being transformed; etc.

In some embodiments it can be desirable to provide optional false-color algorithms. For example, instead of mapping out-of-gamut points to points on the gamut boundary that are in some sense 'closest' to the out-of-gamut points, one could map out-of-gamut points to a reserved color or to in-gamut colors that are far from (even furthest from) the point. In some embodiments out-of-gamut points are mapped to corresponding points that are on the gamut boundary on a far side of axis **11** from the out-of gamut point. In some embodiments the corresponding points are located on the gamut boundary on a line passing through the out-of-gamut point and axis **11**. Such a mapping will make out-of-gamut points stand out in contrast to surrounding in-gamut points. Such false color mapping may be useful to assist a colorist or other professional to study the areas of an image that have out-of-gamut points.

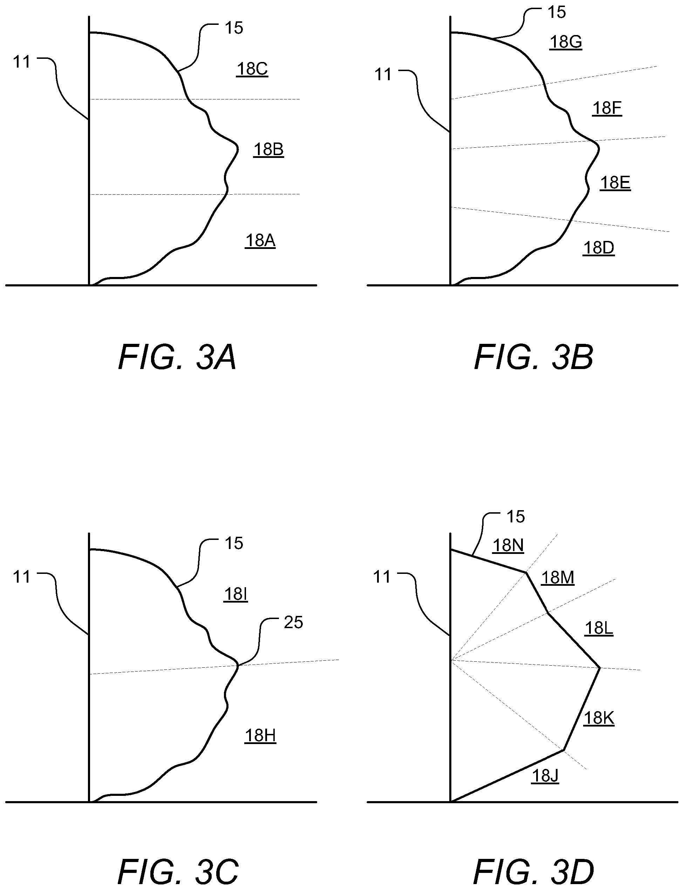

In some embodiments, the choice of algorithm applied to determine a mapping direction for out-of-gamut points depends on the location of the points. In some such embodiments, longitudinal planes in which out-of-gamut points may be located are divided into sections and each section is associated with a corresponding algorithm for determining mapping directions for out-of-gamut points falling within the section. Figures 3A, 3B, 3C and 3D illustrate example ways in which areas of a half-plane in which out-of-gamut points may be located may be sectioned. In some embodiments, locations of section boundaries are determined at least in part based on the locations of features of boundary **15** lying in the half-plane. For example, section boundaries may be located based on locations of one or more of white point **19,** black point **18,** cusp **25,** sections of boundary **15** approximated by linear segments of a piecewise linear curve, or the like. In some embodiments, the mapping algorithm used to map a point is selected based on a coordinate value of the point along axis **11** (e.g. a lightness value for the pixel).

Figure 3A shows sections **18A, 18B** and **18C** defined between transverse planes (e.g. the section boundaries have constant values on axis **11**). Figure 3B shows sections **18D** through **18G** defined between lines passing through points on axis **11** and extending away from axis **11** at defined angles. Figure 3C shows two sections **18H** and **181** delineated by a boundary passing through both a point on axis **11** and cusp **25**. Figure 3D shows sections **18J** through **18N** delineated by boundaries which pass through endpoints of piecewise linear segments that define boundary **15**. It can be appreciated that the number of sections in a half-plane may be varied.

In the embodiments described above, out-of-gamut points are clipped to boundary **15** by translating the out-of-gamut points to a point where a mapping trajectory intersects boundary **15**. In other embodiments some or all out-of-gamut points are compressed into a region within gamut **14** and adjacent to boundary **15**. In such embodiments, points that are farther out-of-gamut may be mapped to locations on or closer to boundary **15** whereas points that are not so far out-of-gamut may be mapped to points farther into the interior of gamut **14**.

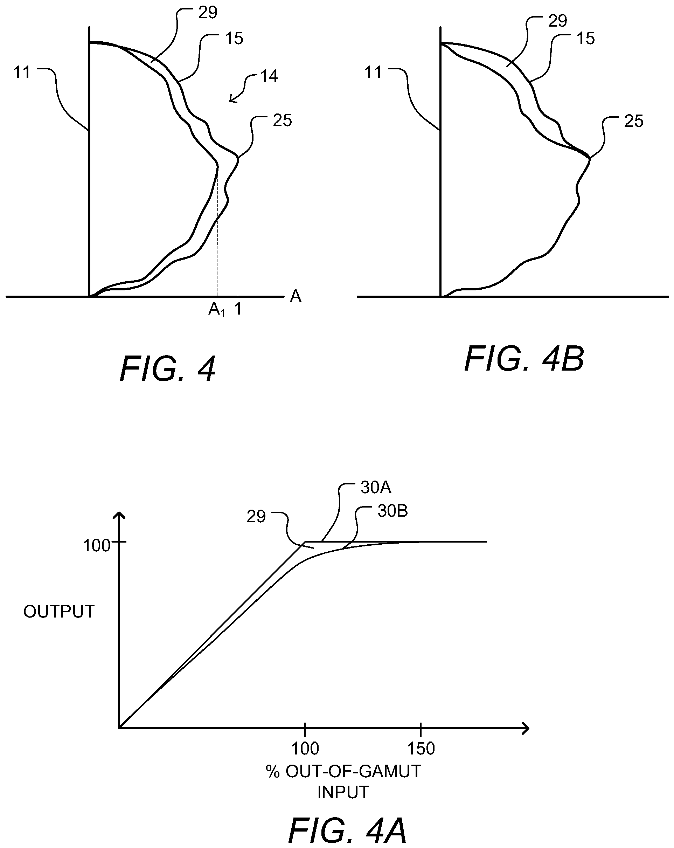

Figure 4 illustrates compression as it may be applied in an example embodiment. Out-of-gamut points are mapped into a region **29** that is interior to gamut **14** adjacent to boundary **15**. In-gamut points within region **29** are also mapped inwardly in gamut **14** to leave room for the out-of-gamut points. In an embodiment, mapping trajectories are determined for out-of-gamut points and each out-of-gamut point is mapped to a corresponding point along the mapping trajectory that is determined based at least in part on a measure of how much out-of-gamut the point is (the distance of the out-of-gamut point from boundary **15**). In-gamut points that are close to boundary **15** are mapped along the mapping trajectory to corresponding points that are determined based at least in part on a measure of how close the in-gamut points are to boundary **15** (the distance of the in-gamut points to boundary **15**).

Figure 4 illustrates some possibilities for the types of compression that may be applied. The horizontal axis represents a normalized distance along a mapping trajectory as measured by a parameter **A** having the value of 1 at the intersection of the mapping trajectory with boundary **15**. Points located in the interior of gamut **14** (i.e. points for which **A A1** < 1) are mapped to themselves. Points having values of **A** that are in the range **A1<A 1** are mapped toward the interior of gamut **14** to make room for at least some out-of-gamut points inside boundary **15**. Points for which **A>1** are mapped into outer portions of region **29**. In some embodiments, all points on a trajectory that are out-of-gamut by more than some threshold amount are mapped to a point on boundary **15**.

In Figure 4A, curve **30A** illustrates an example of a case where all out-of gamut points are mapped to corresponding points on boundary **15**; curve **30B** illustrates an example of a case where points that are far out of gamut are mapped to boundary **15,** closer out-of-gamut points are mapped to a region inside boundary **15,** and some in-gamut points that are near boundary **15** are compressed inwardly in color space **10** to make room for the closer out-of-gamut points.

In the embodiment illustrated in Figure 4A, region **29** has a non-uniform thickness. In some embodiments, including the illustrated embodiment, region **29** tapers to zero thickness at white point **19** and/or black point **18**. In the illustrated embodiment, region **29** tapers to zero thickness at both white point **19** and black point **18**. In some embodiments, region **29** may have a thickness that is a function of the distance of boundary **15** from axis **11**. For example, in some embodiments region **29** has a thickness that is a fixed proportion of the distance between boundary **15** and axis **11**. In other embodiments, a thickness of region **29** is a function of position along axis **11** (with the thickness going to zero at positions corresponding to black point **18** and white point **19**. In some such embodiments, mappings include a component that is a function of intensity.

In one embodiment a main mapping table such as lookup Table I described below specifies a mapping for points on a reference line between a global center point and a cusp of the gamut boundary. A separate mapping table may be provided for the black and white points. The separate mapping table may, for example, provide that all out of gamut points are clipped to the gamut boundary. This is reasonable to do because typical gamuts have no volume at the black and white points. For points not on axis **11** or the reference line, specific mapping tables may be determined by interpolating between the main mapping table and the separate mapping table. The interpolation may be based upon the position (e.g the angular position of the point between axis **11** and the reference line). A similar result may be achieved using an algorithm that varies the mapping of a point based on its position.

In some embodiments, points below a threshold lightness value (e.g. below cusp **25** or below a 50% lightness value or below some other specified threshold) are clipped to boundary **15** whereas points having a lightness value above the threshold are mapped into gamut **14** using an algorithm that provides compression of some points in gamut **14**. In some embodiments a region **29** tapers to zero at a location on boundary **15** corresponding to the threshold. An example of such an embodiment is illustrated in Figure 4B.

Gamut and tone mapping methods as described herein may be implemented using a programmed data processor (such as one or more microprocessors, graphics processors, digital signal processors, or the like) and/or specialized hardware (such as one or more suitably configured field programmable gate arrays (FPGAs), application specific integrated circuits (ASICs), logic pipelines, or the like. An issue in commercial applications is that image processing can be undesirably slow, especially where the images are video images, and can consume undesirably large amounts of computing resources and/or can require undesirably expensive hardware for a desired level of performance. Some example embodiments incorporate features that facilitate efficient gamut and tone mapping that may be implemented with relatively simple hardware and/or reduced computational resources.

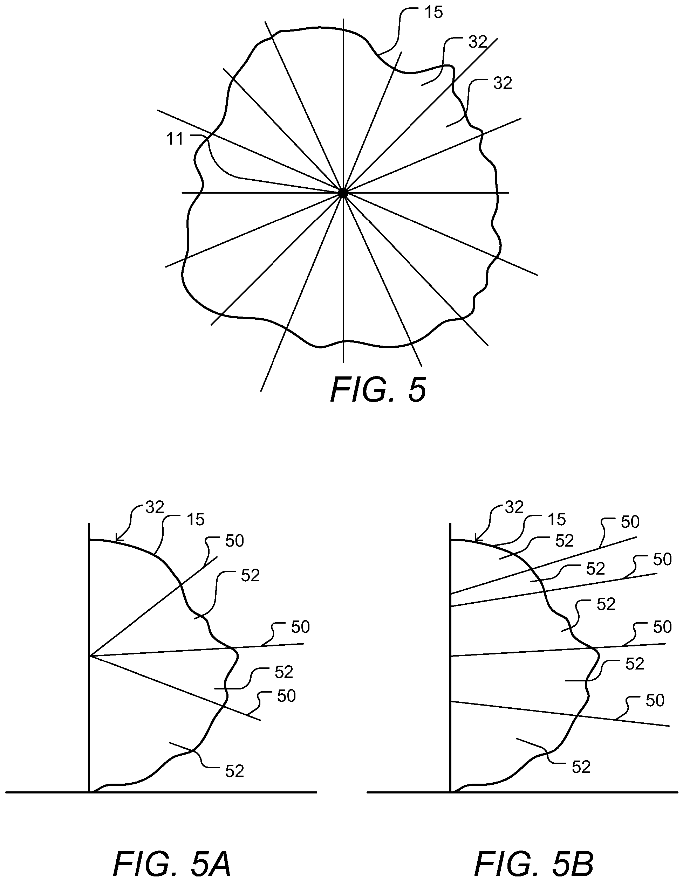

Determining whether or not a point falls outside of gamut **14** can be computationally-and memory-intensive since boundary **15** may be made up of a very large number of discrete points. Some embodiments represent boundary **15** by a reduced data set. Figure 5 illustrates an approach taken in some such embodiments. Gamut **14** is divided into segments **32**. Each segment **32** spans a few degrees of the circumference of gamut **14**. In the illustrated embodiment, each segment **32** is wedge-shaped and the inner edge of the segment lies along axis **11**. The number of segments **32** may be varied. In some embodiments, gamut **14** is divided into a number of segments in the range of 30 segments to 720 segments. Segments **32** are preferably thin enough at boundary **15** that the distance of boundary **15** from axis **11** is nearly constant across the thickness of the segment.

Segments **32** may be termed "hue segments" as hue is the same or nearly the same for all points within each segment **32**.

Within each segment, boundary **15** may be approximated by a piecewise function. In preferred embodiments, the piecewise function is a piecewise-linear function. For example, each segment may be divided into a number of sections. It is convenient for each segment to be divided into a number of sections that is a power of two. For example, in some embodiments, each segment is divided into between 16 and 128 sections.

In example embodiments, boundaries between adjacent sections are straight lines that intersect with axis **11**. Figures 5A and 5B show examples of ways that a segment may be subdivided into sections. In Figure 5A all section boundaries intersect at a common point. In Figure 5B, the section boundaries do not all intersect at a common point. The section boundaries are arranged so that every out-of-gamut point is associated with only one section.

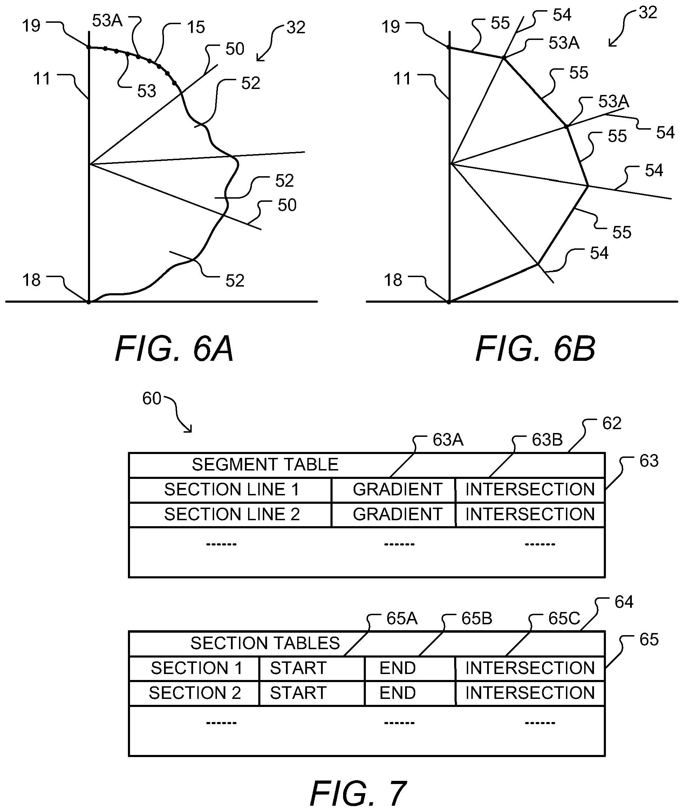

One example method for dividing a segment into sections is illustrated in Figures 6A and 6B. In Figure 6A, a segment **32** is divided into a number of sections **52** along predetermined section lines **50**. Each section **52** contains a number of points **53** on gamut boundary **15**. The points **53** in each section are combined, for example by averaging, to yield a single representative point **53A** in each section **52**.

Black point **18** and white point **19** are established on axis **11** by locating the points on boundary **15** having respectively the smallest and largest luminances in each segment and then interpolating . In many cases these points will already lie on axis **11**. For cases where they do not, one can determine an axis crossing point by, for example, averaging the luminance values for the black (minimum luminance) or white (maximum luminance) points. In some embodiments a weighted average is taken to identify the axis crossing point. For example, weights for each black or whit point may be determined by summing the distances that the points are away from luminance axis **11** and weighting the luminance value for each point by the distance that the point is away from axis **11** divided by the sum.

As shown in Figure 6B, new section lines **54** are drawn through each representative point **53A**. The portion of boundary **15** lying in the segment **32** can then be approximated by a piecewise curve comprising a set of straight line segments **55** joining representative boundary points **53A** and black and white points **18** and **19**.

In some embodiments, positions of section lines **50** are subjected to optimization to improve the fit of the piecewise curve to the portion of the gamut boundary in the segment. This may be done once to reduce ongoing computational burden.

In such embodiments, boundary **15** can be represented with a relatively small amount of data. For example, Figure 7 illustrates a data structure **60** representing a boundary **15**. Data structure **60** comprises a table **62** corresponding to each segment **32**. Each table **62** comprises a record **63** for each section line. Each record **63** comprises sufficient information to specify the section line. For example, in the illustrated embodiment, each record **63** stores a gradient **63A** and intersection point **63B** indicating where the section line intersects axis **11**. In the illustrated embodiment, data structure **60** comprises an additional table **64** for each segment **32**. Table **64** comprises a record **65** for each section of the segment. In the illustrated embodiment, record **65** contains data indicating the start boundary point **65A,** end boundary point **65B** and section line intersection point **65C** for each section. Section line intersection point **65C** specifies a point at which the section line intersects with an adjoining section line.

Data structure **60** may be a compact representation of boundary **15**. For example, for the case where gamut **14** is divided into 60 segments each having 64 sections, and a 16 entry table may be used to determine point mappings and data structure **60** may contain 32523 values. Each value may, for example, comprise a 32-bit floating point value.

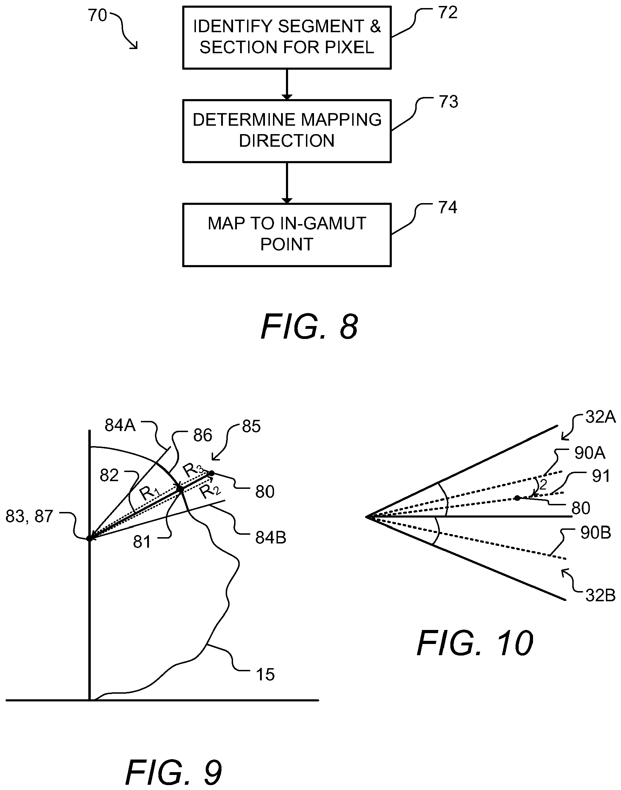

Figure 8 illustrates a mapping method **70** for mapping out-of-gamut points to in-gamut points. Method **70** comprises a block **72** which determines which section of which segment each out-of-pixel point belongs to. At block **73,** method **70** determines a mapping direction for the out-of-gamut pixel. At block **74,** method **70** maps the out-of-gamut point to an in-gamut point.

Figure 9 illustrates one approach that may be applied in block **74** of Figure 8. For each out-of gamut point **80,** a corresponding boundary intercept point **81** on gamut boundary **15** is identified. Boundary intercept point is on a line **82** between the out-of-gamut point **80** and the intersection point **83** of the section lines **84A** and **84B** that demarcate the section **85** in which out-of-gamut point **80** is located. The point of intersection **81** between line **82** and line segment **86** that constitutes the portion of gamut boundary **15** that lies in section **85** may be determined using any suitable line intersection algorithm (embodied in hardware or software depending on the implementation).

Once boundary intercept point **81** has been identified then boundary intercept point **81** may be used to establish a measure of how far out-of-gamut point **80** is. For example, a distance **R1** between boundary intercept point **81** and axis intercept point **87** may be determined and a distance **R3** between boundary intercept point **81** and out-of-gamut point **80** may be determined. In this case, the ratio **R3/R1** provides an example measure of how far out-of-gamut point **80** is. In another example embodiment a distance **R2** between the point **80** and axis intercept point **87** is determined. In this case the measure may be given by **R2/R1** which has a value larger than one for out-of-gamut points.

In such embodiments, line **82** may provide a mapping direction and point **80** may be mapped to a point that is in-gamut and has a location along line **82** that is some function of the measure (e.g. a function of **R3/R1** or **R2/R1).** In some embodiments, the function takes as a parameter how far out-of-gamut is a farthest out-of-gamut point either in the image being processed or, in some embodiments, in a set of images being processed (for example, in a set of two or more video frames).

In some embodiments, out-of gamut points for which the measure is below a threshold are mapped into an interior region of gamut **14** whereas out-of-gamut points for which the measure equals or exceeds the threshold may be clipped to boundary **15** (e.g. a point **80** may be clipped to boundary **15** by mapping the point **80** to boundary intersection point **81**). The threshold applied to determine whether or not to clip a point **80** to boundary **15** may be fixed or determined based somehow on the current image data or image data for one or more related images (where the image being processed is a frame of a video sequence, the related images may comprise, for example, adjacent or nearby frames in the video sequence).

For example, methods and apparatus according to some embodiments acquire statistics regarding the number of out-of-gamut points and the measures of how far out-of-gamut the points are. Such statistics may be acquired for the image being processed and/or for related images. In some embodiments, a threshold is set equal to or based on one or more of:

- a measure of how far out-of-gamut is a farthest out-of-gamut point in a related image;
- a measure of how far out-of-gamut is a median, average, or mean out-of-gamut point in the image being processed and/or a related image;
- a measure of how far out-of-gamut is a Nth percentile out-of-gamut point in the image being processed and/or a related image;
- a measure of how far out-of-gamut is a farthest out-of-gamut point in the image being processed;
- etc.

In a specific example embodiment, a threshold is set equal to the measure of a most out-of-gamut point from a previous frame or group of frames. For example where the measure is given by **R2/R1** and the value of the measure is X then the threshold may be set to X such that points for which the measure has a value **M** in the range of 1<**M** X are mapped to a region within gamut **14** while points for which the measure has a value **M**>X are clipped to boundary **15**. In another specific example embodiment a mapping function is selected so that the farthest out-of gamut point is mapped to boundary **15** and all other out-of-gamut points are mapped to a region within gamut **15**. In another specific example embodiment a mapping function is selected so that out-of gamut points for which the measure equals or exceeds that of a certain percentile of the points from a related image are mapped to boundary **15** and all other out-of-gamut points are mapped to a region within gamut **15**.

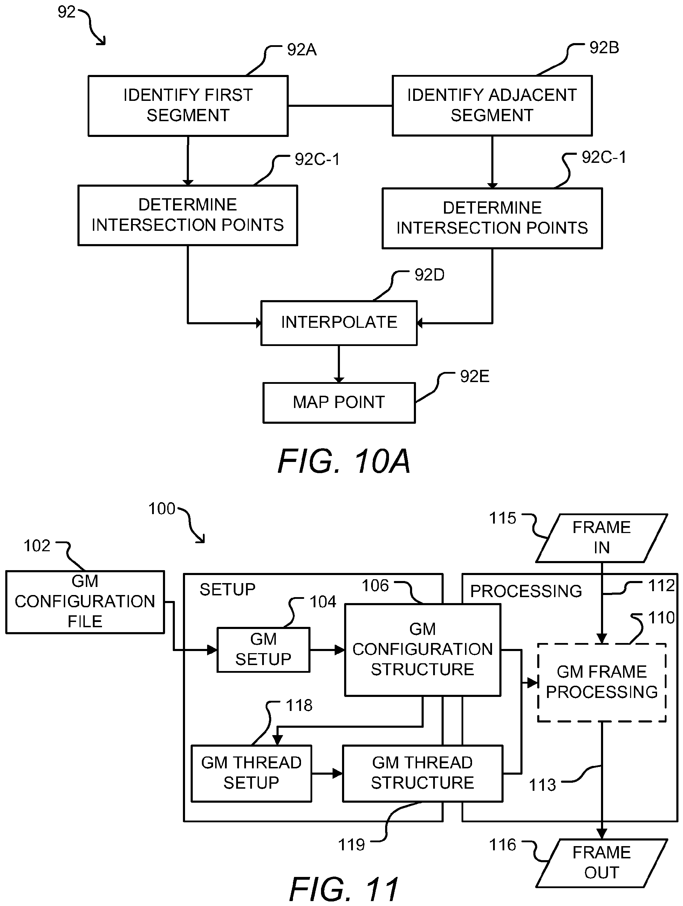

The number of segments **32** affects the potential error introduced by assuming that boundary **15** is the same for points of all hues falling within each segment **32**. In some embodiments interpolation is performed between segments **52**. This is illustrated in Figure 10 which shows a latitudinal plane through gamut **14**. An out of gamut point **80** is shown in a segment **32A**. Lines **90** are shown which bisect segments **32**. Point **80** lies on a line **91** at a polar angle *è* from line **90A** toward line **90B**. In this embodiment, a boundary intersection point **81** corresponding to point **80** is determined based on the approximation of boundary **15** specified for each of segments **32A** and **32B**. Interpolation is performed between the resulting points to determine a boundary intersection point to be used in mapping point **80** into gamut **14**.

In some embodiments distances (e.g. **R1, R2** and/or **R3**) suitable for computing a measure of how far point **80** is out of gamut are determined for each of segments **32A** and **32B** and the resulting measures are interpolated between to establish a measure of the degree to which point **80** is out-of-gamut. The resulting measure and boundary intersection point **81C** may be applied in mapping the point **80** to a corresponding point in gamut **14**. Interpolation may be based on the relative sizes of the angles between line **91** and lines **90A** and **90B**. The interpolation may comprise linear interpolation or, in alternative embodiments higher-order interpolation based upon multiple known boundary values.

Figure 10A is a flow chart illustrating a method **92** which applies interpolation between distances determined for two adjacent segments to establish a mapping for a point. Block **92A** identifies a first segment to which the point belongs. Block **92B** identifies a second segment adjacent to the first segment to which the point being mapped is closest. In blocks **92C-1** and **92C-2,** the axis intersection points and distances to boundary **15** for the point being mapped are determined for the first and second segments respectively. In block **92D,** the values determined in blocks **92C-1** and **92C-2** are interpolated between (using the angular position of the point being mapped between centers of the first and second segments). In block **92E,** the point is mapped to a new location on a line passing through the point and axis **11** using the interpolated values from block **92D.**

Certain of the methods described above are advantageous in that they are well adapted to efficient implementations. Figure 11 shows an example gamut compression apparatus **100**. Apparatus **100** comprises a configuration file **102** comprising a memory containing configuration data. When apparatus **100** is initiated, a setup module **104** reads configuration file **102** and builds a number of lookup tables based on the configuration data. The lookup tables are hosted in a configuration structure **106**. Configuration structure **106** may, for example, comprise a FPGA, a set of registers, a set of memory locations or the like.

Processing logic **110** is located in a data path between an input **112** and an output **113**. Processing logic **110** performs mapping of values in input image data **115** to yield output image data **116.** The mapping is determined by configuration structure **106**. Since mapping of pixel values may be performed independently for different pixels, in some embodiments mapping of values for several pixels is performed in parallel. In some embodiments, processing logic **110** is implemented by way of a software process executing on a data processor. Some such embodiments provide multi-threaded software in which mapping for a plurality of pixels is performed in a corresponding plurality of concurrently-executing threads. In the illustrated embodiment a thread setup block **118** initiates threads and a thread data structure **119** maintains information regarding executing threads. In some embodiments, each frame of a video is processed by a thread or a set of threads. In other embodiments parallel mapping for a plurality of pixels is performed in parallel logic pipelines and processing logic **110** may incorporate a selection mechanism to direct incoming pixel values into available logic pipelines.

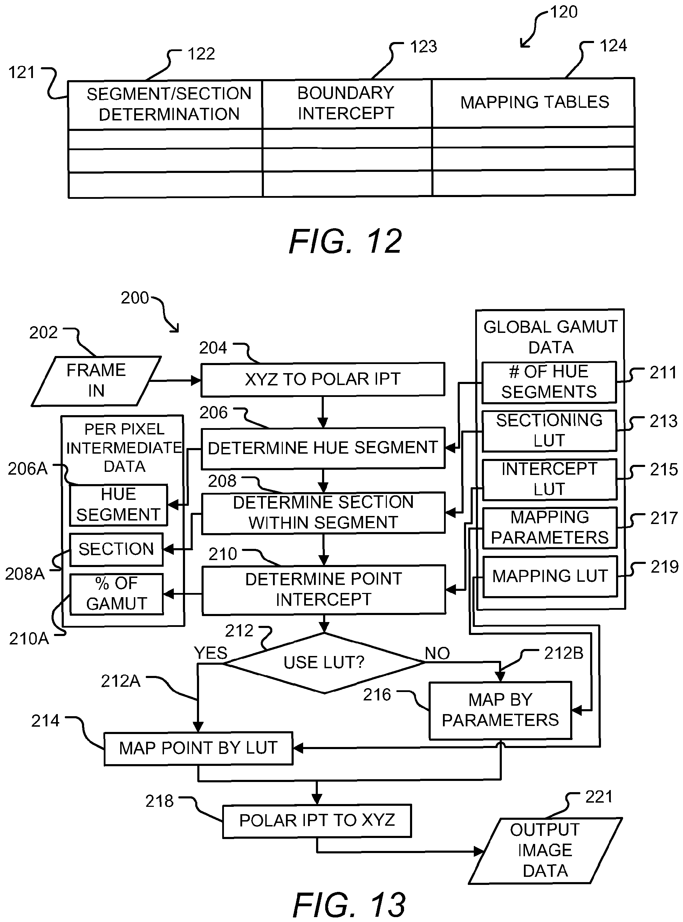

Figure 12 shows a possible set of configuration information **120** for use in gamut mapping according to some example embodiments. Configuration information **120** includes a table **121** containing general configuration information. In an example embodiment, the general configuration information comprises values specifying: a number of segments; a number of sections into which each segment is divided; and a length of pixel mapping tables. It can be convenient to specify the number of segments as the inverse of the number of segments since some efficient algorithms can use the inverse of the number of segments to determine which segments individual points should be assigned to. In some embodiments general configuration information table **121** contains 3 items of data.

A set of segment/section determination tables **122** store information specifying boundaries of sections within segments. The boundaries may comprise section lines, for example. The information may specify, for example, boundary intercept and gradient for each section line for each segment. Where there are HS segments and NS sections per segment then, in some embodiments, segment/section determination tables **122** comprise HS(2NS-2) items of data.

A set of boundary intercept determination tables **123** stores information useful for determining a boundary intercept toward which out-of-gamut points may be mapped and/or determining a direction in which in-gamut points may be compressed. In an example embodiment, boundary intercept determination tables **123** store three 2D coordinate sets for each section of each segment. The coordinate sets may, for example, specify a start point, end point and edge cross-section (e.g. section line intersection point **65**) for each section. This is illustrated, for example in Figure 7. In some embodiments, tables **123** comprise HS(6SN) items of data.

A set of pixel mapping tables **124** specify mappings for points. Pixel mapping tables **124** may, for example, specify input and output percentages of gamut. In some embodiments, pixel mapping tables comprise HS(2TL) items of data where TL is a number of entries in each table. Table I shows an example pixel mapping table.

| Table I - Example Pixel-mapping Lookup Table | | | | | | | | |
|---|---|---|---|---|---|---|---|---|
| Input | 0 | 0.85 | 0.92 | 1 | 1.2 | 1.3 | 1.4 | 2 |
| Output | 0 | 0.85 | 0.9 | 0.93 | 0.98 | 0.99 | 1 | 1 |

Some embodiments adaptively modify pixel mapping tables such as that shown in Table 1 to take into account how far out-of-gamut any out-of-gamut points tend to be. Such modifications may be made to the input values in a lookup table. For example, suppose that statistics for one or more previous frames of data indicate that the farthest out-of-gamut points are out-of-gamut by 150% of the target gamut (i.e. input values do not exceed 1.5). The lookup table of Table I could be modified as illustrated in Table II.

| Table II - Example Modified Pixel-mapping Lookup Table | | | | | | | | |
|---|---|---|---|---|---|---|---|---|
| Input | 0 | 0.85 | 0.92 | 1 | 1.1 | 1.15 | 1.25 | 1.5 |
| Output | 0 | 0.85 | 0.9 | 0.93 | 0.98 | 0.99 | 1 | 1 |

In some embodiments, such adaptive modifications to the lookup tables affect only input values corresponding to out-of-gamut pixels (e.g. input values above 1.0 in the examples of Tables I and II).

Figure 13 is a flow chart illustrating a method **200** that may be applied to real-time gamut mapping of image data (which is video data in some embodiments). Method **200** receives a frame **202** of image data. In the illustrated embodiment, pixel values in frame **202** define points expressed in an XYZ color space. Block **204** performs a transformation of the data of frame **202** to a polar color space such as polar IPT or CIE LAB.

Blocks **206** through **216** are performed for each pixel in the transformed data. Block **206** identifies a segment **206A** in which a color point for the pixel is located. Block **206** uses data **211** defining the segments (e.g. data specifying how many segments there are) in block **206.** In some embodiments block **206** comprises multiplying a polar hue value by an inverse of the range of hue values divided by the number of segments. For example, a segment **206A** for a point may be identified by computing:

$$Seg = \theta \times \left( \frac{NS}{360} \right)$$

$$(1)$$

where: the integer part of *Seg* is a value identifying the segment, $\theta$ is a polar hue value (in degrees), NS is the number of segments and 360 is the range of hue values.

In other embodiments a lookup table is consulted to identify which segment a point belongs to. It is not mandatory that segments each be the same size or that the segments be regular. A lookup table is a convenient way to identify a segment corresponding to a point where the segments are irregular.

Block **208** identifies a section **208A** of the segment to which the color point belongs. Block **208** may use a sectioning lookup table **213** to determine which section **208A** the point belongs to. In some embodiments block **208** determines a gradient (slope) of a line joining the color point being mapped to a point on axis **11** intersected by a section boundary. A comparison of this gradient to a gradient of the section boundary indicates whether the color point is above (i.e. in a greater luminance direction) or below the section boundary.

In some embodiments, this is iterated for different section boundaries to narrow down the location of the color point to one section. For example, a binary search may be conducted. Where there are an even number of sections, then block **208** may perform a gradient comparison to determine whether the color point is in a first portion of the segment above a central section boundary in the segment or in a second portion of the segment below the central section boundary.

This can then be repeated by performing a gradient comparison to determine whether the color point is above or below a central section boundary to the first or second portion of the segment as the case may be. This may be continued until the section in which the color point is located has been determined. Where there are $2^n$ sections (i.e. SN=$2^n$) then the section in which the color point is located can be identified by performing n gradient comparisons.

Other options are also possible. For example, an apparatus may be configured to determine intersections of section lines with a line passing through the color point parallel to axis **11**. The section **208A** to which the color point belongs may be identified by comparing the magnitude of the luminance values for the intersection point to the luminance value for the color point.

Block **210** determines the mapping trajectory's intercept with the gamut boundary; the intercept may be determined by locating the intersection between the gamut boundary **15** and the line that runs between the point being mapped and the previously calculated section edges' intersection point. The mapping trajectory's intersection point with axis **11** and distance to both the point being mapped and gamut boundary **15** may also be determined (e.g. a measure **210A** of how far out-of-gamut the point is). The intercept at block **210** may be determined by an intercept lookup table **215**.

Block **212** determines how the point will be mapped. In the case of result **212A,** method **200** proceeds to block **214** which maps the point to a point translated in the mapping direction by a distance determined by a mapping lookup table **219.** In the case of result **212B,** method **200** proceeds to block **216** which performs a mapping according to mapping parameters **217.** In some embodiments the decision in block **212** is based on coordinates of a point to be mapped.

The mapping parameters may, for example identify one of a plurality of predefined rules for mapping points. The mapping parameters may also include additional inputs which control aspects of the operation of a selected rule. For example, mapping parameters may identify a rule selected from:

1. A rule that clips out of gamut points to the gamut boundary (or a clipping boundary within the gamut boundary).
2. A rule that scales all points by the same amount so that all points are within the gamut after scaling.
3. A rule that scales all points by some amount and then clips out-of gamut scaled points to the gamut boundary.
4. A rule that scales by a variable scaling (knee function) depending upon how close points are to being out of gamut (or how far out of gamut the points are).
5. A rule that applies a look up table to determine mappings for points (there may be a plurality of such rules that apply different look up tables to be selected among).

The mapping parameters may include values that specify the behaviour of a selected rule. For example, where a rule has been selected that scales out-of-gamut pixels inwardly, a parameter may determine what feature(s) pixels are mapped towards. Such a parameter may, for example, control a selection between mapping toward:

1. A global center.
2. A hue cusp.
3. A constant lightness.

The parameters may also specify values controlling things such as:

- The coordinates of a global center.
- An amount, if any, that a clipping boundary lies indide of the gamut boundary.
- A scaling factor.
- A point outside of which pixels are scaled (or a scaling changes).
- etc.

In some embodiments separate mapping parameters are provided for points above and below a cusp in the gamut boundary.

Block **218** transforms the mapped data points back to an XYZ color space to yield output image data **221.**

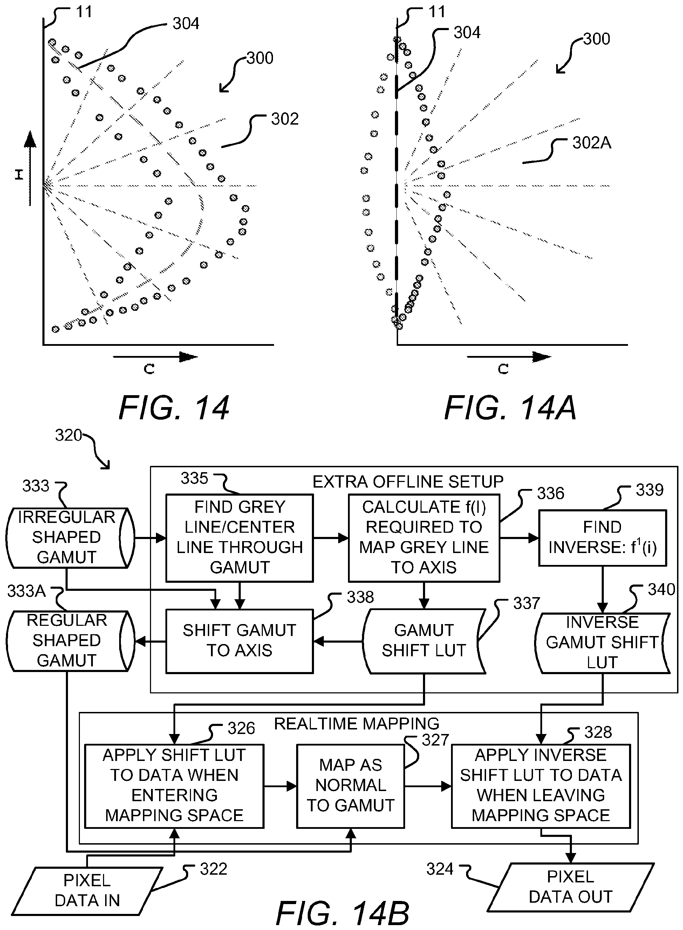

Some target devices or media may support gamuts in which the transformation of the gamut into the color space in which mapping is performed results in a grey line that is curved. This is illustrated in Figure 14 showing a cross section in color space **300** of a gamut **302** in which grey line **304** is both curved and translated relative to axis **11** of the color space **300.**

Such situations may be addressed by making a transformation in color space **300** between gamut **302** and a transformed version of gamut **302** in which the grey line **304** is aligned with axis **11**. This is illustrated in Figure 14A which shows a transformed version **302A** of gamut **302**. Mapping may be performed using transformed version **302A** and an inverse transformation may be performed prior to outputting transformed image data.

Figure 14B illustrates a data flow for the case where such additional transformations are performed to accommodate an irregular gamut. Mapping is performed in a logic pipeline **320** which may be implemented in hardware and/or software. Input pixel data **322** is processed in logic pipeline **302** to yield output pixel data **324.** Logic pipeline **320** includes a first transformation **326** that has been determined to map the target gamut so that grey line **304** is aligned with axis **11.** A mapping block **327** performs gamut mapping in the manner described herein. An inverse transformation block **328** applies an inverse of the translation performed by first transformation **326** to yield output pixel data **324.**

Logic pipeline is supported by configuration data **330.** Target gamut data **333** defining a target gamut is processed in block **335** to identify a grey line **304.** In some embodiments the grey line is identified by determining a center of mass of all or selected boundary points for each luminance level. In some embodiments a grey line may be specified by parameters accompanying or forming part of the gamut data. A transformation to bring grey line **304** coincident with axis **11** is determined in block **336.** Block **336** provides data defining the transformation. For example, block **336** may provide output in the form of one or more lookup tables **337** which defines the transformation. Block **338** applies the transformation specified by lookup tables **337** to target gamut data **333** to yield a regularized version of the target gamut defined by regularized target gamut **333A.** Regularized target gamut is applied as the target gamut by mapping block **326.**

Block **339** determines an inverse of the transformation represented by lookup tables **337.** Block **339** provides data **340** defining the inverse transformation. For example, block **339** may provide output in the form of one or more lookup tables **340** which define the inverse transformation. Lookup tables **340** are applied by block **328.**

Gamut mapping as described herein may be applied to digital images such as photographs, computer-generated images, video images, or the like.

In some embodiments, image data is available in a format native to a target display (such as RGB) from which it can be easy to determine whether or not a point is out-of-gamut for the target display. For example, coordinates for each of R, G and B can be individually compared to ranges that the target device is capable of reproducing. A point may be determined to be out-of-gamut if any of the coordinates is outside the range reachable by the target device. As noted above, gamut mapping according to methods as described herein is facilitated by operating in a color space in which points are specified by cylindrical coordinates with constant hue for constant value of a coordinate *è* indicating angle about an axis. In some embodiments, image data is received in a native color space such as RGB and out-of-gamut pixels are identified in the RGB color space. The image data is transformed into a color space more convenient for performing a gamut transformation and the previously-identified out-of-gamut points are transformed (for example onto gamut boundary **15**). In-gamut points may be ignored by the gamut translation such that their values are unaltered.

It can be appreciated that embodiments as described herein may be implemented in ways that do not require buffering of significant (or any) amounts of image data. Gamut compression may be performed on a pixel-by-pixel basis without reference to the transformations applied to other pixels. Where the image data is video data, statistics regarding out-of-gamut pixels may be accumulated as video frames are processed and these statistics applied to gamut compression of future video frames. Embodiments as described herein may be implemented in ways that replace computationally intensive processes with look up operations performed in look up tables.

Gamut transformation methods and apparatus, as described herein may be configured in a wide range of ways which differ in the points in a target gamut to which points in a source gamut are mapped. In embodiments in which it is desired to preserve a creative intent expressed in an original image and/or to provide transformed images which appear closely similar to original images it is generally desirable that a gamut transformation possesses one or more of, and preferably all of, the following properties:

- Minimization of color differences between the source and transformed images (so as to most closely approach colors present in the source image within the capability of the target device or medium);
- Preservation of differences between colors (i.e. if colors can be distinguished in the source image then the corresponding colors in the transformed image should also be distinguishable).

It is also desirable that a transformation be adaptable to translate from a wide range of source gamuts to gamuts of a wide range of target devices and/or media. Advantageously, gamut and/or tone transformations as described herein may be embodied in ways that closely approach these properties.

It can be appreciated that the invention may be applied in a wide range of contexts. For example, some embodiments provide displays or image processing apparatus used upstream from displays which implement methods or apparatus for gamut transformation as described herein. In some embodiments a video or image source such as a media player, video server, computer game, virtual reality source, camera, or the like implements methods or apparatus as described herein to adapt image data (which may comprise video data and/or still image data) for display on a particular display or type of display. These example implementations are not intended to be limiting.

The above description and accompanying drawings illustrate a number of non-limiting example embodiments of the invention. Features of the example embodiments may be combined in ways other than those expressly set out herein to provide further example embodiments.

Certain implementations of the invention comprise computer processors which execute software instructions which cause the processors to perform a method of the invention. For example, one or more processors in an image processing device such as a display may implement the methods of Figures 2, 8, 10A,11, 13, 14B and 15 by executing software instructions in a program memory accessible to the processors. The invention may also be provided in the form of a program product. The program product may comprise any medium which carries a set of computer-readable signals comprising instructions which, when executed by a data processor, cause the data processor to execute a method of the invention. Program products according to the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

While a number of exemplary aspects and embodiments have been discussed above, those of skill in the art will recognize certain modifications, permutations, additions and sub-combinations thereof. It is therefore intended that the following appended claims and claims hereafter introduced are interpreted to include all such modifications, permutations, additions and sub-combinations as are within their true spirit and scope.

Accordingly, the invention may be embodied in any of the forms described herein, including, but not limited to the following Enumerated Example Embodiments (EEEs) which describe structure, features, and functionality of some portions of the present invention:

EEE1. A method for gamut mapping, the method comprising:

    a) identifying points in image data that are out-of-gamut for a target gamut;
    b) for the out-of-gamut points,
    identifying a surface of constant hue on which the point is located;
    identifying one of a plurality of sections on the surface in which the point is located;
    selecting a mapping algorithm corresponding to the section in which the point is located;
    applying the selected mapping algorithm to transform the out-of-gamut point to a corresponding in-gamut point.

EEE2. A method according to EEE 1 comprising locating a cusp in a portion of a boundary of the gamut lying in the surface of constant hue, applying a first mapping algorithm for mapping points having lightness greater than that of the cusp and applying a second mapping algorithm for mapping points having lightness below that of the cusp.

EEE3.A method according to EEE 2 comprising applying a constant-luminance mapping for points having lightness lower than the lightness of the cusp.

EEE4.A method according to EEE 2 or 3 comprising applying a mapping that takes points toward a fixed point for points having lightness greater than the lightness of the cusp.

EEE5.A method according to any one of EEEs 1 to 4 wherein the target gamut comprises a nonlinear grey line and the method comprises;

providing a transformation that transforms the target gamut into a transformed target gamut in which the grey line is linear and aligned with an axis of a color space and applying the transformation to the image data before identifying the points in the image data that are out-of-gamut; and

applying an inverse of the transformation to the image data after applying the selected mapping algorithm to transform the out-of-gamut point.

EEE6.A method according to EEE 5 wherein applying the transformation to the target gamut comprises mapping a black point of the target gamut to a different point.

EEE7.A method according to EEE 1 performed in a color-opponent color space.

EEE8.A method according to EEE 7 wherein the color space comprises the IPT or CIE LAB color space.

EEE9.A method for gamut mapping, the method comprising:

    a) identifying points in image data that are out-of-gamut for a target gamut;
    b) for an out-of-gamut point,
    determining whether the point is above or below a surface defined in part by a cusp in a boundary of the gamut at a hue corresponding to the point;
    selecting a first mapping algorithm if the point is above the surface;
    selecting a second mapping algorithm if the point is below the surface;
    applying the selected mapping algorithm to transform the out-of-gamut point to a corresponding in-gamut point.

EEE10.A method according to EEE 9 wherein the second mapping algorithm comprises a constant lightness transformation.

EEE11.A method according to EEE 10 wherein the second mapping algorithm clips the out-of-gamut point to the gamut boundary.

EEE12.A method according to EEE 10 wherein the first mapping algorithm maps the out-of-gamut point toward a fixed point.

EEE13.A method according to EEE 12 wherein the fixed point comprises a fixed point on a lightness axis.

EEE14.A method according to EEE 13 wherein the fixed point is half-way between a white point and a black point on the lightness axis.

EEE15.A method according to EEE 13 wherein the fixed point has a lightness value equal to a lightness value of the cusp.

EEE16.A method according to EEE 12 wherein the fixed point is on a far side of the lightness axis from the out-of-gamut point.

EEE17.A method according to EEE 10 wherein the first mapping algorithm maps the out-of-gamut point to a point on the gamut boundary that is closest to the out-of-gamut point.

EEE18.A method according to EEE 10 comprising mapping points lying within the gamut in a layer adjacent to the gamut boundary inwardly.

EEE19.A method according to EEE 18 wherein the layer is variable in thickness.

EEE20.A method according to EEE 19 wherein the layer tapers to zero at black and white points.

EEE21.A method according to EEE 10 wherein the first mapping algorithm comprises mapping out-of-gamut points into a region that is interior to and adjacent the gamut boundary and compressing in-gamut points within the region inwardly.

EEE22.A method according to EEE 10 wherein the first mapping algorithm comprises determining a mapping trajectory for the out-of-gamut point and mapping the out-of-gamut point to a corresponding point along the mapping trajectory that is determined based at least in part on a measure of how far out-of-gamut the out-of-gamut point is.

EEE23.A method according to EEE 10 comprising mapping points having a lightness value below a lightness value of the cusp to the gamut boundary and mapping points having a lightness value above the lightness value of the cusp into the gamut using an algorithm that provides compression of some points in the gamut.

EEE24.A method for gamut mapping, the method comprising:

a) identifying points in image data that are out-of-gamut for a target gamut;
b) for an out-of-gamut point,
identifying one of a plurality of in to which the out-of-gamut point is located, each segment bounded by planes that intersect on a lightness axis of the gamut;
identifying one of a plurality of sections of the segment in which the out-of-gamut point is located;
identifying one of a plurality of available mapping algorithms that corresponds to the segment and section in which the out-of-gamut point is located; and,
applying the identified mapping algorithm to map the out-of-gamut point to a corresponding in-gamut point.

EEE25.A method for gamut mapping, the method comprising: mapping out-of-gamut points having a lightness value below a threshold lightness value to a boundary of a gamut and mapping out-of-gamut points having a lightness value above the threshold lightness value into the gamut using an algorithm that provides compression of at least some points within the gamut.

EEE26.A method according to EEE 25 wherein the method provides compression of points within a layer adjacent to the gamut boundary wherein the layer tapers to zero thickness at the threshold lightness value.

EEE27.A gamut mapping method comprising determining whether a point is out-of-gamut by comparing coordinates of the point to a reduced data set defining a gamut boundary wherein the reduced data set represents the gamut as a plurality of wedge-shaped segments each defined between a pair of planes that intersect along a lightness axis of the gamut and a piecewise boundary for each of the segments.

EEE28.A method according to EEE 27 wherein the piecewise boundary is a piecewise linear boundary.

EEE29.A method according to EEE 27 wherein the gamut is divided into 30 to 720 segments.

EEE30.A method according to EEE 27 comprising determining distances between an out-of-gamut point and the gamut boundary for two adjacent segments and interpolating to establish an interpolated distance between the out-of-gamut point and the gamut boundary.

EEE31.Apparatus comprising:

a comparison unit configured to identify a point that is out-of-gamut relative to a gamut boundary;
a selection unit configured to select one of a plurality of mapping algorithms based on one or more coordinate values for the out-of-gamut point; and

a mapping unit configured to apply the mapping algorithm selected by the selection unit to map the out-of-gamut point to a corresponding in-gamut point

As will be apparent to those skilled in the art in the light of the foregoing disclosure, many alterations and modifications are possible in the practice of this invention without departing from the scope thereof. Accordingly, the scope of the invention is to be construed in accordance with the substance defined by the following claims.

**Claims**

1. A method for gamut mapping, the method comprising:

   a) identifying points in image data that are in a region (29) that is interior to a target gamut (14) and adjacent to a boundary (15) of the target gamut (14) lying in a surface of constant hue;
   b) for the in-gamut points of the region (29),
   mapping the in-gamut points of the region (29) inwardly in the target gamut (14) to leave room for out-of-gamut points;
   c) identifying points in the image data that are out-of-gamut for the target gamut (14);
   d) for the out-of-gamut points,

   identifying a surface of constant hue on which the point is located;
   identifying (72) one of a plurality of sections (52) on the surface in which the point is located;
   selecting (73) a mapping algorithm corresponding to the section (52) in which the point is located;
   applying (74) the selected mapping algorithm to transform the out-of-gamut point to a corresponding in-gamut point of the region (29) that is interior to the target gamut (14) and adjacent to the boundary (15) of the target gamut (14) lying in the surface of constant hue.

2. A method according to claim 1 comprising locating a cusp (25) in a portion of a boundary (15) of the gamut (14) lying in the surface of constant hue, applying a first mapping algorithm for mapping points having lightness greater than that of the cusp (25) and applying a second mapping algorithm for mapping points having lightness below that of the cusp (25), and wherein the cusp (25) is a point on the boundary (15) in a longitudinal half-plane that is farthest from an axis (11) of color coordinates of the gamut (14).

3. A method according to claim 2 comprising applying a constant-luminance mapping for points having lightness lower than the lightness of the cusp (25).

4. A method according to claim 2 or 3 comprising applying a mapping that takes points toward a fixed point for points having lightness greater than the lightness of the cusp (25).

5. A method according to any of claims 1 to 4 wherein transforming points of the image data into the target gamut (302) in which the mapping is performed results in a curved grey line (304) that deviates from the lightness axis (11) of the target color space (300), and wherein the method further comprises:

   providing a transformation that transforms the target gamut (302) into a transformed target gamut (302A) in which the grey line (304) is linear and aligned with the lightness axis (11) of the target color space (300) and applying the transformation to the image data before identifying the points in the image data that are out-of-gamut; and
   applying an inverse of the transformation to the image data after applying the selected mapping algorithm to transform the out-of-gamut point.

6. A method according to claim 5 wherein applying the transformation to the target gamut comprises mapping a black point of the target gamut to a different point.

7. A method according to claim 1 performed in a color-opponent color space.

8. A method according to claim 7 wherein the color space comprises the IPT or CIE LAB color space.

9. A method according to claim 2 wherein the second mapping algorithm comprises a constant lightness transformation.

10. A method according to claim 9 wherein the second mapping algorithm clips the out-of-gamut point to the gamut boundary (15).

11. A method according to claim 4 wherein the fixed point comprises a fixed point on a lightness axis (11).

12. A method according to any of claims 1 to 11, comprising determining whether a point is out-of-gamut by comparing coordinates of the point to a reduced data set defining a gamut boundary (15) wherein the reduced data set represents the gamut (14) as a plurality of wedge-shaped segments (32) each defined between a pair of planes that intersect along a lightness axis (11) of the gamut (14) and a piecewise boundary for each of the segments (32).

13. Apparatus, configured to perform the method of any of claims 1 to 12, the apparatus comprising:

a comparison unit configured to identify a point that is out-of-gamut relative to a gamut boundary (15);
a selection unit configured to select one of a plurality of mapping algorithms based on one or more coordinate values for the out-of-gamut point; and
a mapping unit configured to apply the mapping algorithm selected by the selection unit to map the out-of-gamut point to a corresponding in-gamut point.

**Patentansprüche**

1. Verfahren für das Abbilden einer Farbskala, wobei das Verfahren aufweist:

a) Identifizieren von Punkten in Bilddaten, die sich in einem Gebiet (29) befinden, das sich innerhalb einer Zielfarbskala (14) und in der Nähe einer Grenze (15) der Zielfarbskala (14) befindet, wobei die Grenze in einer Oberfläche eines konstanten Farbtons liegt;
b) für die in der Farbskala liegenden Punkte des Gebiets (29),
Abbilden der in der Farbskala liegenden Punkte des Gebiets (29) nach innen in die Zielfarbskala (14), um Raum für die außerhalb der Farbskala liegenden Punkte zu lassen;
c) Identifizieren von Punkten in den Bilddaten, die für die Zielfarbskala (14) außerhalb der Farbskala liegen;
d) für die außerhalb der Farbskala liegenden Punkte,

Identifizieren einer Oberfläche eines konstanten Farbtons, auf welcher der Punkt angesiedelt ist;
Identifizieren (72) eines aus einer Vielzahl von Abschnitten (52) auf der Oberfläche, in dem der Punkt angesiedelt ist;
Auswählen (73) eines Abbildungsalgorithmus, der dem Abschnitt (52) entspricht, in dem der Punkt angesiedelt ist;
Anwenden (74) des ausgewählten Abbildungsalgorithmus, um den außerhalb der Farbskala liegenden Punkt in einen entsprechenden in der Farbskala liegenden Punkt des Gebiets (29) umzuwandeln, das sich innerhalb der Zielfarbskala (14) und in der Nähe der Grenze (15) der Zielfarbskala (14) befindet, wobei die Grenze in der Oberfläche eines konstanten Farbtons liegt.

2. Verfahren nach Anspruch 1, umfassend Ansiedeln eines Scheitelpunkts (25) in einem Anteil einer Grenze (15) der Farbskala (14), wobei die Grenze in der Oberfläche eines konstanten Farbtons liegt, Anwenden eines ersten Abbildungsalgorithmus zum Abbilden von Punkten, die eine Helligkeit aufweisen, die größer als diejenige des Scheitelpunkts (25) ist, und Anwenden eines zweiten Abbildungsalgorithmus zum Abbilden von Punkten, die eine Helligkeit aufweisen, die geringer als diejenige des Scheitelpunkts (25) ist, und wobei der Scheitelpunkt (25) ein Punkt auf der Grenze (15) in einer longitudinalen Halbebene ist, die von einer Achse (11) von Farbkoordinaten der Farbskala (14) am weitesten entfernt ist.

3. Verfahren nach Anspruch 2, das ein Anwenden einer Abbildung mit konstanter Leuchtdichte für Punkte umfasst, die eine Helligkeit aufweisen, die geringer als diejenige des Scheitelpunkts (25) ist.

4. Verfahren nach Anspruch 2 oder 3, das ein Anwenden einer Abbildung, die Punkte in Richtung auf einen festen Punkt bewegt, für Punkte umfasst, die eine Helligkeit aufweisen, die größer als diejenige des Scheitelpunkts (25) ist.

**5.** Verfahren nach einem der Ansprüche 1 bis 4, wobei das Umwandeln von Punkten der Bilddaten in die Zielfarbskala (302), in der das Abbilden ausgeführt wird, zu einer gekrümmten grauen Linie (304) führt, die von der Helligkeitsachse (11) des Zielfarbraums (300) abweicht, und wobei das Verfahren außerdem umfasst:

Bereitstellen einer Umwandlung, welche die Zielfarbskala (302) in eine umgewandelte Zielfarbskala (302A) umwandelt, in der die graue Linie (304) linear ist und auf die Helligkeitsachse (11) des Zielfarbraums (300) ausgerichtet ist, und Anwenden der Umwandlung auf die Bilddaten bevor die Punkte der Bilddaten identifiziert werden, die außerhalb der Farbskala liegen; und

Anwenden einer Umkehrumwandlung auf die Bilddaten nach dem Anwenden des ausgewählten Abbildungsalgorithmus, um die außerhalb der Farbskala liegenden Punkte umzuwandeln.

**6.** Verfahren nach Anspruch 5, wobei das Anwenden der Umwandlung auf die Zielfarbskala ein Abbilden eines schwarzen Punkts der Zielfarbskala auf einen anderen Punkt umfasst.

**7.** Verfahren nach Anspruch 1, das in einem Farbraum der Gegenfarbe ausgeführt wird.

**8.** Verfahren nach Anspruch 7, wobei der Farbraum den IPT- or CIE-LAB-Farbraum umfasst.

**9.** Verfahren nach Anspruch 2, wobei der zweite Abbildungsalgorithmus eine konstante Helligkeitsumwandlung umfasst.

**10.** Verfahren nach Anspruch 9, wobei der zweite Abbildungsalgorithmus den außerhalb der Farbskala liegenden Punkt an die Farbskalengrenze (15) bindet.

**11.** Verfahren nach Anspruch 4, wobei der feste Punkt einen festen Punkt auf einer Helligkeitsachse (11) umfasst.

**12.** Verfahren nach einem der Ansprüche 1 bis 11, das ein Ermitteln umfasst, ob ein Punkt außerhalb der Farbskala liegt, indem die Koordinaten des Punkts mit einem reduzierten Datensatz verglichen werden, der eine Farbskalengrenze (15) definiert, wobei der reduzierte Datensatz die Farbskala (14) als eine Vielzahl von keilförmigen Segmenten (32) darstellt, die jeweils zwischen einem Paar von Ebenen definiert sind, die sich entlang einer Helligkeitsachse (11) der Farbskala (14) und einer stückweisen Grenze für jedes der Segmente (32) schneiden.

**13.** Vorrichtung, die konfiguriert ist, um das Verfahren nach einem der Ansprüche 1 bis 12 auszuführen, wobei die Vorrichtung umfasst:

eine Vergleichseinheit, die konfiguriert ist, um einen Punkt zu identifizieren, der in Bezug auf eine Farbskalengrenze (15) außerhalb der Farbskala liegt;

eine Auswahleinheit, die konfiguriert ist, um aufgrund eines oder mehrerer Koordinatenwerte für den außerhalb der Farbskala liegenden Punkt einen aus einer Vielzahl von Abbildungsalgorithmen auszuwählen; und

eine Abbildungseinheit, die konfiguriert ist, um den durch die Auswahleinheit ausgewählten Abbildungsalgorithmus anzuwenden, um den außerhalb der Farbskala liegenden Punkt auf einen entsprechenden in der Farbskala liegenden Punkt abzubilden.

**Revendications**

**1.** Procédé de mappage de gamme de couleurs, le procédé comprenant les étapes consistant à :

a) identifier des points dans des données d'image qui sont dans une région (29) qui est à l'intérieur d'une gamme de couleurs cible (14) et adjacente à une frontière (15) de la gamme de couleurs cible (14) se trouvant dans une surface de teinte constante ;

b) pour les points dans la gamme de couleurs de la région (29), mapper des points dans la gamme de couleurs de la région (29) vers l'intérieur dans la gamme de couleurs cible (14) pour laisser de la place pour des points hors gamme de couleurs ;

c) identifier des points dans les données d'image qui sont hors gamme de couleurs pour la gamme de couleurs cible (14) ;

d) pour les points hors gamme de couleurs, identifier une surface de teinte constante sur laquelle le point est situé ;

identifier (72) une section parmi une pluralité de sections (52) sur la surface dans laquelle le point est situé ;
sélectionner (73) un algorithme de mappage correspondant à la section (52) dans laquelle le point est situé ;
appliquer (74) l'algorithme de mappage sélectionné pour transformer le point hors gamme de couleurs en un point dans la gamme de couleurs correspondant de la région (29) qui est à l'intérieur de la gamme de couleurs cible (14) et adjacent à la frontière (15) de la gamme de couleurs cible (14) se trouvant dans la surface de teinte constante.

2. Procédé selon la revendication 1, comprenant la localisation d'un point de rebroussement (25) dans une partie d'une frontière (15) de la gamme de couleurs (14) se trouvant dans la surface de teinte constante, l'application d'un premier algorithme de mappage pour mapper des points ayant une clarté supérieure à celle du point de rebroussement (25) et l'application d'un second algorithme de mappage pour mapper des points ayant une clarté au-dessous de celle du point de rebroussement (25), et le point de rebroussement (25) étant un point sur la frontière (15) dans un demi-plan longitudinal qui est le plus éloigné d'un axe (11) de coordonnées de couleur de la gamme de couleurs (14).

3. Procédé selon la revendication 2, comprenant l'application d'un mappage de luminance constante pour des points ayant une clarté inférieure à la clarté du point de rebroussement (25).

4. Procédé selon la revendication 2 ou 3, comprenant l'application d'un mappage qui prend des points vers un point fixe pour des points ayant une clarté supérieure à la clarté du point de rebroussement (25).

5. Procédé selon l'une quelconque des revendications 1 à 4, dans lequel transformer des points des données d'image dans la gamme de couleurs cible (302), dans laquelle le mappage est effectué, permet d'obtenir une ligne de gris incurvée (304) qui s'écarte de l'axe de luminosité (11) de l'espace de couleur cible (300) et le procédé comprenant en outre :

la fourniture d'une transformation qui transforme la gamme de couleurs cible (302) en une gamme de couleurs cible transformée (302A) dans laquelle la ligne grise (304) est linéaire et alignée avec l'axe de luminosité (11) de l'espace de couleur cible (300) et l'application de la transformation aux données d'image avant d'identifier les points dans les données d'image qui sont hors gamme de couleurs ; et
l'application d'un inverse de la transformation aux données d'image après l'application de l'algorithme de mappage sélectionné pour transformer le point hors gamme de couleurs.

6. Procédé selon la revendication 5 dans lequel l'application de la transformation à la gamme de couleurs cible comprend le mappage d'un point noir de la gamme de couleurs cible avec un point différent.

7. Procédé selon la revendication 1 réalisé dans un espace colorimétrique de couleurs opposées.

8. Procédé selon la revendication 7 dans lequel l'espace colorimétrique comprend l'espace colorimétrique IPT ou CIE LAB.

9. Procédé selon la revendication 2, le second algorithme de mappage comprenant une transformation de luminosité constante.

10. Procédé selon la revendication 9, dans lequel le second algorithme de mappage fixe le point hors gamme de couleurs à la frontière de gamme de couleurs (15).

11. Procédé selon la revendication 4, le point fixe comprenant un point fixe sur un axe de luminosité (11).

12. Procédé selon l'une quelconque des revendications 1 à 11, consistant à déterminer si un point est hors gamme de couleurs par comparaison des coordonnées du point à un ensemble de données réduit définissant une frontière de gamme de couleurs (15) l'ensemble de données réduit représentant la gamme de couleurs (14) sous la forme d'une pluralité de segments en forme de coin (32) chacun étant défini entre une paire de plans qui se croisent le long d'un axe de luminosité (11) de la gamme de couleurs (14) et une frontière par morceaux pour chacun des segments (32).

13. Appareil, conçu pour mettre en oeuvre le procédé selon l'une quelconque des revendications 1 à 12, l'appareil comprenant :

une unité de comparaison conçue pour identifier un point qui est hors gamme de couleurs par rapport à une frontière de gamme de couleurs (15) ;

une unité de sélection conçue pour sélectionner un algorithme parmi une pluralité d'algorithmes de mappage sur la base d'une ou de plusieurs valeurs de coordonnées pour le point hors gamme de couleurs ; et

une unité de mappage conçue pour appliquer l'algorithme de mappage sélectionné par l'unité de sélection pour mapper le point hors gamme de couleurs à un point correspondant dans la gamme de couleurs.

**FIG. 1**

**FIG. 2**

FIG. 2A

FIG. 2B

11

15

18C

18B

18A

*FIG. 3A*

11

15

18G

18F

18E

18D

*FIG. 3B*

11

15

18I

25

18H

*FIG. 3C*

11

15

18N

18M

18L

18K

18J

*FIG. 3D*

FIG. 4

FIG. 4B

FIG. 4A

FIG. 5

FIG. 5A

FIG. 5B

FIG. 6A

FIG. 6B

| SEGMENT TABLE | | |
|---|---|---|
| SECTION LINE 1 | GRADIENT | INTERSECTION |
| SECTION LINE 2 | GRADIENT | INTERSECTION |
| ------ | ------ | ------ |

| SECTION TABLES | | | |
|---|---|---|---|
| SECTION 1 | START | END | INTERSECTION |
| SECTION 2 | START | END | INTERSECTION |
| ------ | | ------ | ------ |

FIG. 7

FIG. 8

FIG. 9

FIG. 10

92

```
┌──────────────────┐                    ┌──────────────────┐
│  IDENTIFY FIRST  │ ────── 92A         │ IDENTIFY ADJACENT│ ────── 92B
│     SEGMENT      │ ───────────────────│     SEGMENT      │
└──────────────────┘                    └──────────────────┘
         │                                       │
         ▼  92C-1                                ▼  92C-1
┌──────────────────┐                    ┌──────────────────┐
│    DETERMINE     │                    │    DETERMINE     │
│ INTERSECTION     │                    │ INTERSECTION     │
│    POINTS        │                    │    POINTS        │
└──────────────────┘                    └──────────────────┘
         │                                       │
         └──────────────┐      92D   ┌───────────┘
                        ▼            ▼
                ┌──────────────────────┐
                │     INTERPOLATE      │
                └──────────────────────┘
                        │
                        ▼   92E
                ┌──────────────────────┐
                │      MAP POINT       │
                └──────────────────────┘
```

## FIG. 10A

100

```
┌────────────────┐   ┌─────────────────────────────────────────┐  ┌──────────────────────────────┐
│       GM       │   │ SETUP                   106              │  │ PROCESSING          112      │
│  CONFIGURATION │   │            ┌────┐   ┌─────────────────┐  │  │              ┌─────────┐     │
│     FILE       │───┼──────────▶ │ GM │   │       GM        │  │  │              │ FRAME   │     │
│                │   │            │SETUP│──▶│ CONFIGURATION  │──┼──┼──────────────│   IN    │ 115 │
└────────────────┘   │            └────┘   │   STRUCTURE     │  │  │              └─────────┘     │
     102             │             104     └─────────────────┘  │  │                   │          │
                     │                            │             │  │                   ▼   110     │
                     │      118                   │             │  │  ┌────────────────────────┐   │
                     │       │                    │             │  │  │    GM FRAME            │   │
                     │       ▼                    │             │  │  │    PROCESSING          │   │
                     │  ┌──────────┐   ┌──────────────────┐    │  │  └────────────────────────┘   │
                     │  │ GM THREAD│   │   GM THREAD       │    │  │              │   113          │
                     │  │  SETUP   │──▶│   STRUCTURE       │    │  │              ▼                │
                     │  └──────────┘   └──────────────────┘    │  │        ┌─────────┐            │
                     │                      119                │  │        │ FRAME   │  116        │
                     └─────────────────────────────────────────┘  │        │  OUT    │            │
                                                                   └────────└─────────┘────────────┘
```

## FIG. 11

| 121 | SEGMENT/SECTION DETERMINATION 122 | BOUNDARY INTERCEPT 123 | MAPPING TABLES 124 |
|---|---|---|---|
| | | | |
| | | | |
| | | | |

*FIG. 12*

*FIG. 13*

FIG. 14

FIG. 14A

FIG. 14B

400

401 — PIXEL
DATA IN

402 — OUT OF
GAMUT?

403 — NEXT
PIXEL

404 — IDENTIFY SEGMENT

406 — IDENTIFY SECTION

408 — SELECT MAPPING
ALGORITHM

410 — APPLY MAPPING
ALGORITHM

411 — PIXEL
DATA OUT

*FIG. 15*

**EP 2 569 949 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61334249 B

- US 6618499 B1

### Non-patent literature cited in the description

- **G.D. FINLAYSON ; S. SÜSSTRUNK.** Spectral Sharpening and the Bradford Transform. *Proc. Color Imaging Symposium (CIS 2000),* 2000, 236-243
- **G.D. FINLAYSON ; S. SÜSSTRUNK.** Performance of a Chromatic Adaptation Transform Based on Spectral Sharpening. *Proc. IS&T/SID 8th Color Imaging Conference,* 2000, vol. 8, 49-55

- **S. SÜSSTRUNK ; J. HOLM ; G.D. FINLAYSON.** Chromatic adaptation performance of different RGB sensors. *Proc. IS&T/SPIE Electronic Imaging 2001: Color Imaging,* 2001, vol. 4300, 172-183
- Digital Color Imaging Handbook. CRC Press, 2003